# EUROPÄISCHE PATENTANMELDUNG

(11) **EP 4 792 923 A2**
(43) Veröffentlichungstag der Anmeldung: **19.08.2026**
(21) Anmeldenummer: 26189713.6
(22) Anmeldetag: 26.03.2024
(51) Int. Cl.: B01J 13/00

(54) **VORRICHTUNG ZUM ERZEUGEN EINES AEROSOLS**

(30) Priorität: 22.06.2023 DE 102023116424
(62) Dokumentnummer(n) der früheren Anmeldung(en) nach Art. 76 EPÜ: 24715540.1 / 4 608 546
(71) Anmelder: Olig AG, 6002 Luzern (CH)
(72) Erfinder: Fackler, Helmut, 89415 Lauingen (DE); Krapf, Rainer, 80637 München (DE)
(74) Vertreter: Pfenning, Meinig & Partner mbB

(57) **Zusammenfassung**

Die vorliegende Erfindung betrifft eine Vorrichtung zur Erzeugung eines Aerosols, mit einem ein Adsorptionsmittel aufweisenden Durchströmungskörper, wobei der Durchströmungskörper an einem stromaufwärtigen Ende mindestens einen Fluideinlass und an einem stromabwärtigen Ende mindestens einen Fluidausfluss aufweist, und das Adsorptionsmittel dazu ausgelegt ist, einem in dem Durchströmungskörper entstehenden Aerosol Flüssigkeit zu entziehen, um so eine Tröpfchengröße eines in dem Durchströmungskörper erzeugten Aerosols in Strömungsrichtung des Aerosols hin zu dem Fluidauslass zu reduzieren.

## Beschreibung

Die vorliegende Erfindung betrifft eine Einrichtung zur Erzeugung eines Aerosols.

Aus dem Stand der Technik sind Vorrichtung zur Erzeugung von Aerosolen bekannt, allerdings sind diese meist nur zur Erzeugung von Aerosolen mit relativ großer Tröpfchengröße > 3µ geeignet.

Aus der US 2022/218016 A1 ist beispielsweise ein aerosolerzeugender Artikel bekannt, der ein aerosolerzeugendes Substrat einschließt, das Folgendes umfasst: ein homogenisiertes Pflanzenmaterial, das mindestens 2,5 Gewichtsprozent Eukalyptuspartikel auf Trockengewichtsbasis enthält, einen Aerosolbildner, ein Bindemittel, mindestens 0,04 mg Eucalyptol pro Gramm des Substrats, bezogen auf das Trockengewicht, mindestens 0,2 mg Eucalyptin pro Gramm des Substrats, bezogen auf das Trockengewicht, und mindestens 0,2 mg 8-Desmethyleucalyptin pro Gramm des Substrats, bezogen auf das Trockengewicht.

Ferner ist aus der WO 2020/089120 A1 ein aerosolbildender Artikel (z.B. einen Raucherersatzartikel wie ein HNB-Verbrauchsartikel) bekannt, der ein aerosolbildendes Substrat und ein Filterelement umfasst, wobei das Filterelement ein polares Lösungsmittel wie Wasser umfasst. Ein weiterer Aspekt der vorliegenden Offenbarung bezieht sich auf einen aerosolbildenden Artikel, der ein aerosolbildendes Substrat und ein endständiges Filterelement am stromabwärts gelegenen axialen Ende des Artikels umfasst, wobei das endständige Filterelement einen adsorbierenden Zusatzstoff, z. B. Aktivkohle, umfasst.

In der EP 2 999 507 B1 wird ferner ein Aerosolerzeugungssystem offenbart, das eine Medikamentenquelle und eine Quelle einer flüchtigen abgabefördernden Verbindung aufweist. Die Quelle einer flüchtigen abgabefördernden Verbindung umfasst dabei ein erstes Sorptionselement, ein zweites Sorptionselement nachgeschaltet des ersten Sorptionselements und eine flüchtige abgabefördernde Verbindung, die auf das erste Sorptionselement und das zweite Sorptionselement sorbiert ist, wobei die Freigabegeschwindigkeit der flüchtigen abgabefördernden Verbindung vom ersten Sorptionselement größer ist als die Freigabegeschwindigkeit der flüchtigen abgabefördernden Verbindung vom zweiten Sorptionselement.

Der vorliegenden Erfindung liegt daher die Aufgabe zugrunde, eine Vorrichtung zur Erzeugung eines Aerosols zu schaffen, welche dazu geeignet ist, ein stabiles Aerosol mit einer besonders geringen Tröpfchengröße zu schaffen. Diese Aufgabe wird durch eine Vorrichtung mit den Merkmalen des Anspruchs 1 gelöst.

Danach ist eine erfindungsgemäße Vorrichtung zur Erzeugung eines Aerosols vorgesehen, mit einem ein Adsorptionsmittel aufweisenden Durchströmungskörper, wobei der Durchströmungskörper an einem stromaufwärtigen Ende mindestens einen Fluidauslass aufweist, und das Adsorptionsmittel dazu ausgelegt ist, einem in dem Durchströmungskörper entstehenden Aerosol Flüssigkeit zu entziehen, um so eine Tröpfchengröße eines in dem Durchströmungskörper erzeugten Aerosols in Strömungsrichtung des Aerosols hin zu dem Fluidauslass zu reduzieren, wobei hierfür das Adsorptionsmittel einen Zeolithen umfasst und eine Menge des Zeolithen in dem Durchströmungskörper zwischen 50g und 150g beträgt, und das Adsorptionsmittel in einem inneren Gehäuse aufgenommen ist, welches von einem äußeren Gehäuse umgeben ist, wobei das innere und das äußere Gehäuse relativ zueinander rotierbar und/oder verschieblich beweglich angeordnet sind und das innere Gehäuse und das äußere Gehäuse jeweils mindestens eine entlang des Umfangs des Gehäuses angeordnete Öffnung aufweisen, wobei das innere und das äußere Gehäuse relativ zueinander derart rotierbar und/oder verschieblich sind, dass die mindestens zwei Öffnungen zumindest teilweise in Deckung bringbar sind, wodurch ein Fluidpfad in Radialrichtung von außerhalb des äußeren Gehäuses, vorzugsweise von einem Behälter zur Bevorratung einer Flüssigkeit, hin zu dem im inneren Gehäuse enthaltenen Adsorptionsmittel geschaffen wird.

Vorzugsweise ist das erzeugte Aerosol nur unter Licht mit hohem Blauanteil im Wellenlängenbereich 420pm bis 500pm wahrnehmbar.

Das Maximum der Töpfchengrößenverteilung des Aerosols liegt vorzugsweise im Bereich zwischen 0,5 pm bis 1pm.

Das Adsorptionsmittel weist einen Zeolithen auf.

Das Adsorptionsmittel ist dazu ausgelegt, dem in dem Durchströmungskörper entstehenden Aerosol Wasser zu entziehen.

Das Adsorptionsmittel ist ein Zeolith zur Adsorption von Wasser, der das Wasser unter Freisetzung von Adsorptionswärme adsorbiert, wobei bedingt durch die freigesetzte Adsorptionswärme ein Teil des Wassers in die Gasphase überführt wird. Durch die erhöhte Temperatur und die Verringerung des Wasseranteils in der Gasphase verdampft das Wasser in den Aerosoltröpfchen und die Tröpfchengröße des Aerosols wird reduziert.

Eine Luftführung in dem Durchströmungskörper ist vorzugsweise derart ausgestaltet, dass Luft und / oder ein in dem Durchströmungskörper entstehendes Aerosol das Adsorptionsmittel durchströmt. Der Durchströmungskörper ist ein Gehäuse > in welchem das Adsorptionsmittel angeordnet ist.

Eine Menge an Zeolith in dem Durchströmungskörper liegt zwischen 50g und 150g.

Diese Mengen haben sich in der Praxis überraschenderweise als besonders geeignet zur Erzeugung eines gewünschten, feinen Aerosols erwiesen. Das Adsorptionsmittel ist vorzugsweise ein Zeolith mit einer Porengröße von 1 Anström, 2 Anström, 3 Anström oder 4 Anström. Andere Zeolithen, wie 5A, 13X sind ebenfalls denkbar. Ebenso sind Mischungen verschiedenerer Zeolithe oder Adsorptionsmittel denkbar.

Der Zeolith kann derart gewählt sein, dass er während des Adsorptionsprozesses von Wasser eine Temperatur von zwischen 100 °C und 200 °C, vorzugsweise zwischen 120°C und 190°C erreicht.

Insbesondere können Zeolithe zum Einsatz kommen, die mit einem Inertgas, insbesondere Stickstoff, beladen werden können.

Eine erfindungsgemäße Vorrichtung kann weiterhin mit einem in die Vorrichtung integrierten oder extern von dieser vorgesehenen Behälter zur Bevorratung einer Flüssigkeit, vorzugsweise eines Gemischs aus Wasser und mindestens einem Wirkstoff, ausgestattet sein.

Der Behälter zur Bevorratung einer Flüssigkeit ist vorzugsweise von dem Adsorptionsmittel vollständig separat oder separierbar bzw. gegenüber diesem abgedichtet.

Der Behälter kann mit Druck, vorzugsweise im Bereich von 1 bar bis 3 bar, insbesondere 1,5 bar bis 2,5 bar, beaufschlagbar sein.

Der Behälter zur Bevorratung der Flüssigkeit kann einen Lagerbereich oder Aufnahmebereich des Adsorptionsmittels vorzugsweise konzentrisch umgeben oder diesem in Strömungsrichtung des Aerosols vorgeschaltet sein.

Das Adsorptionsmittel ist in einem inneren, vorzugsweise zylindrischen, Gehäuse aufgenommen > welches von einem äußeren, vorzugsweise zylindrischen, Gehäuse vorzugsweise konzentrisch umgeben ist, wobei das innere und das äußere Gehäuse relativ zueinander rotierbar und / oder verschieblich angeordnet sind.

Hierbei ist vorgesehen, dass das innere Gehäuse und das äußere Gehäuse jeweils mindestens eine entlang des Umfangs des Gehäuses angeordnete Öffnung aufweisen, wobei das innere und das äußere Gehäuse relativ zueinander derart rotierbar und / oder verschieblich sind, dass die mindestens zwei Öffnungen zumindest teilweise in Deckung bringbar sind, wodurch ein Fluidpfad in Radialrichtung von außerhalb des äußeren Gehäuses, vorzugsweise von dem Behälter zur Bevorratung der Flüssigkeit, hin zu dem im inneren Gehäuse enthaltenen Adsorptionsmittel geschaffen wird.

In anderen Worten kann durch eine Rotation des inneren Gehäuses relativ zu dem äußeren Gehäuse oder umgekehrt, ein Flusspfad von dem Behälter zu dem Adsorptionsmittel selektiv freigegeben und / oder gesperrt werden.

Weiterhin kann eine erfindungsgemäße Vorrichtung mit einer Zerstäuber- oder Verneblereinheit ausgestattet sein, welche dem Adsorptionsmittel in Strömungsrichtung des Aerosols vorgeschaltet ist.

Die Zerstäuber- oder Verneblereinheit kann eine Düse, insbesondere eine Venturi-Düse, und / oder einen drucklosen Zerstäuber, vorzugsweise einen Ultraschall-Vernebler, aufweisen oder aus diesem bestehen.

Weiterhin kann in dem Durchströmungskörper dem Fluidauslass vorzugsweise unmittelbar vorgeschaltet eine Mischkammer zur Durchmischung des aus dem Adsorptionsmittel austretenden Aerosols angeordnet sein.

Das Adsorptionsmittel kann in der Vorrichtung entnehmbar, vorzugsweise in einer entnehmbaren Kartusche, gelagert sein. Dies erlaubt es, das Adsorptionsmittel zur Regenerierung temporär aus der Vorrichtung zu entnehmen.

Eine erfindungsgemäße Vorrichtung kann beispielsweise ein Inhalator zur Verabreichung eines pharmazeutischen Wirkstoffs sein.

Durch die Erzeugung eines besonders feinen Aerosols kann eine erfindungsgemäße Vorrichtung eine besonders gute Aufnahme eines im Aerosol vorliegenden Wirkstoffs beispielsweise durch die Lungenbläschen ermöglichen.

Eine erfindungsgemäße Vorrichtung kann dazu ausgelegt sein, einen der nachstehenden Wirkstoffe zu applizieren:
der beispielsweise in der in dem Behälter bevorrateten Flüssigkeit enthaltene Wirkstoff kann beispielsweise ein Small Molecule-Wirkstoff, Protein, Hormon oder Zytokin und / oder ein Wirkstoff aus der Gruppe der Zytostatika, Antiasthmatika, Antitussiva, Mukolytika, Antiallergika, Corticoide, Kardiaka, Koronarmittel und / oder Antibiotika und / oder ein Geschmacksstoff, Duftstoff, Aromastoff und / oder Terpen sein.

Unter einem Wirkstoff ist vorzugsweise ein Stoff zu verstehen, mit welchem sich ein bestimmtes Ergebnis erzielen lässt, beispielsweise können die Wirkstoffe eine pharmazeutische Wirkung oder auch eine mechanische Wirkung haben, wie z. B. eine Schmierwirkung, beispielsweise Schmierstoffe (z. B. Mineralöle, synthetische Öle, Schmierfette, MoS2 etc.). Maßgeblich dabei ist, dass sich die Wirkstoffe in Form eines wässrigen Aerosols in die Gasphase bringen lassen können.

Im Zusammenhang mit der Applikation von Nikotin wird in E-Zigaretten Glycerin und Propylenglykol als Matrix eingesetzt. Unter den Temperaturen der Wärmequellen der E-Zigaretten bilden sich Zersetzungsprodukte wie Aldehyde wie Formaldehyd und Acrolein, die außerordentlich giftig sind. Die vorliegende Erfindung ist geeignet, solche schädlichen Effekte zu vermeiden.

Pharmazeutisch wirksame Stoffe, welcher im Rahmen einer erfindungsgemäßen Vorrichtung zum Einsatz sind hierbei ausgewählt aus folgenden besonders bevorzugten Stoffen, jedoch nicht hierauf beschränkt:
- Proteine, Polysaccharide, Lipide, Nukleinsäure sowie Kombinationen oder Mischungen hieraus,
- Nukleotide und/oder Oligonukleotide,
- Insulin, Calcitonin, Leuprolit und Albuterol,
- Antibiotika, Virustatika, Fungizide, immunsuppressive Medikamente, nichtsteroide entzündungshemmende Medikamente, oberflächenaktive Substanzen, Prostaglandine, Mukolytika, Antitussiva, gegen Husten wirkende Medikamente, Rachenschmerz lindernde Medikamente, Vektoren zur Gentherapie,
- Heparin, Ergotamin, humane Wachstumshormone, Sildenaphil, Antiproteasen, Vakzine, Morphine, Phentanyl,
- Antihistaminika, abschwellende Wirkstoffe, Alkalodie, minerale Zusatzstoffe, Laxativa, Vitamine, z. B. Vitamin D3, Antrazida, Anti-Cholesterolemika, Anti-Lipid-Mittel, Antiarrythmetika, Antipyretika, Analgetika, Appetitzügler, Expekt- roanzien, angstlösende Medikamente, Antiulcermittel, entzündungshemmende Substanzen, Herzmedikamente, Medikamente, die auf das cerebrale System wirken, periphere Vasodilatoren, Antiinfektiva, Psychotropika, antimanische Medikamente, Stimulanzien, gastrointestinale Mittel, Sedativa, Medikamente zur Durchfallbehandlung, Medikamente zur Behandlung von Angina, Vasodilatoren, anti-hypertensive Medikamente, Vasokonstriktoren, Migränemedikamente, Antibiotika, Beruhigungsmittel, Antipsychotika, Antitumormedikamente, Antikoagulanzien, antithrombotische Medikamente, Schlafmittel, Antiimetika, Medikamente zur Behandlung von Nausea, Antikonvulsantien, Diuretika, antispastisch wirkende Mittel, Gebährmutterrelaxantien, Mineral- und Nährstoffergänzungsmittel, Mittel gegen Fettleibigkeit, anabole Substanzen, erythropoietische Medikamente, Antiasthmatika, Hustensuppressantien, Mukulytika sowie anti-uricemische Medikamente,
- Abmagerungsmittel/Appetitzügler/Antiadiposita, Acidosetherapeutika, Analepti- ka/Antihypoxämika, Analgetika/Antirheumatika, Anthelminthika, Antiallergika, Anti- anämika, Antiarrhythmika, Antibiotika/ Antiinfektiva, Antidementiva (Nootropika), Antidiabetika, Antidota, Antiemetika/Antivertiginosa, Antiepileptika, Antihämorrhagi- ka (Antifibrinolytika u. a. Hämostatika), Antihypertonika, Antihypoglykämika, Antihypotonika, Antikoagulantia, Antimykotika, Antiphlogistika, Antitussiva/Expektorantia, Arteriosklerosemittel, Betarezeptoren-, Calciumkanalblocker und Hemmstoffe der Renin-Angiotensin-Aldosteron-Systems, Broncholytika/ Antiasthmatika, Cholagoga und Gallenwegstherapeutika, Cholinergika, Corticoide, Diuretika, durchblutungsfördernde Mittel, Entwöhnungsmittel/ Mittel zur Behandlung von Suchterkrankungen, Enzyminhibitoren/Präparate bei Enzymmangel und Transportproteine, Fibrinolytika, Geriatrika Gichtmittel, Grippemittel und Mittel gegen Erkältungskrankheiten, Gynä- kologika, Hepatika, Hypnotika/Sedativa, Hypophysen-/Hypothalamushormone/ andere regulatorische Peptide und ihre Hemmstoffe, Immunmodulatoren, Kardiaka, Koronarmittel, Lipidsenker, Magen-Darm- Mittel, Migränemittel, Mineralstoffpräparate, Rachentherapeutika, Neuropathiepräparate und andere neurotrope Mittel, Oste- oporosemittel/Calcium-/ Knochenstoffwechselregulatoren, Parkinsonmittel und andere Mittel gegen extrapyramidale Störungen, Psychopharmaka, Schilddrüsentherapeutika, Sera/Immunglobuline und Impfstoffe, Sexualhormone und ihre Hemmstoffe, Spasmolytika/ Anticholinergika, Thrombozytenaggregationshemmer, Tuberkulosemittel, Umstimmungsmittel, Urologika, Venentherapeutika, Vitamine, Zytostatika/ andere antineoplastische Mittel u. Protektiva.

Sämtliche vorstehend genannten Wirkstoffe können in Komination oder Isolation im Rahmen einer erfindungsgemäßen Vorrichtung zum Einsatz kommen.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente.

Weiterhin können alle hierin beschriebenen Merkmale der Offenbarung, inklusive der nachstehend im Kontext bevorzugter Ausführungsformen unter Bezugnahme auf die Figuren diskutierter Merkmale, beliebig miteinander kombiniert oder voneinander isoliert beansprucht werden.

Weitere Einzelheiten und Vorteile der Erfindung werden anhand eines in der Zeichnung dargestellten Ausführungsbeispiels näher erläutert.

Es zeigen:
Figur 1: eine Schnittansicht einer Vorrichtung gemäß einer ersten Ausführungsform (nicht erfindungsgemäß);
Figur 2: eine Schnittansicht einer Vorrichtung gemäß einer zweiten Ausführungsform (nicht erfindungsgemäß);
Figur 3: eine Schnittansicht einer Vorrichtung gemäß einer dritten Ausführungsform (nicht erfindungsgemäß);
Figur 4: eine Schnittansicht einer erfindungsgemäßen Vorrichtung gemäß einer vierten Ausführungsform; und
Figur 5: eine weitere Ansicht der Ausführungsform aus Fig. 4.

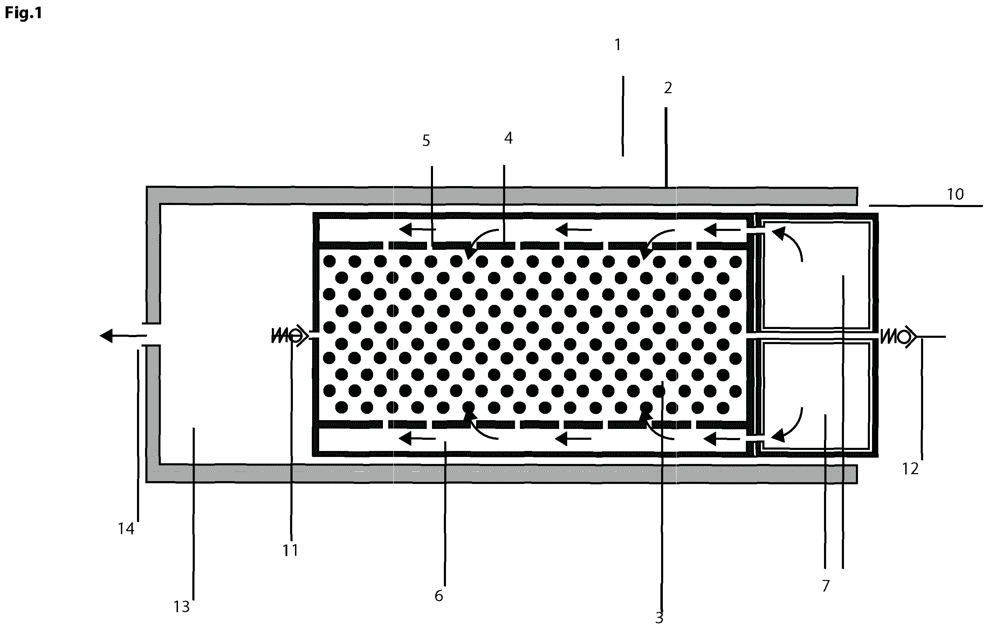

Fig. 1 zeigt eine Vorrichtung 1 meinem Durchströmungskörper in Form eines Gehäuses 2. Die Strömungsrichtung des Aerosols ist in der Darstellung in Fig. 1 von rechts nach links.

In dem Gehäuse 2 ist ein Absorptionsmittel 3 in einer zylindrischen Kartusche 4 aufgenommen bzw. gelagert.

Die zylindrische Kartusche 4 weist entlang ihres Umfangs eine Mehrzahl an Öffnungen 5 ein, durch welche eine einen Wirkstoff enthaltende Flüssigkeit aus einem die Kartusche 4 konzentrisch umgebenden Behälter oder Hohlraum 6 in das Innere der Kartusche 4 einströmen kann, wie dies durch die Pfeile in Fig. 1 gezeigt ist.

Auf einer stromabwärtigen Seite wird der Hohlraum 6 durch eine dichte Wandung begrenzt, sodass die Flüssigkeit in die Kartusche 4 fließen muss und mit dem Adsorptionsmittel in Kontakt kommt.

Die Flüssigkeit wird in einem Behälter 7 bevorratet, welcher mit Druck beaufschlagt ist. Der Behälter 7 ist bei dieser Ausgestaltung in der Vorrichtung 1 lösbar oder unlösbar integriert.

An dem ström aufwärtigen Ende des Gehäuses 2 ist ein Lufteinlass 10 vorgesehenen, durch welchen Luft in das Gehäuse 2 einströmen kann. Die Luft strömt außen an dem die Flüssigkeit enthaltenden Hohlraum 6 vorbei.

An einer stromabwärtigen Seite der Kartusche 4 ist ein Rückschlagventil 11 angeordnet. Weiterhin ist ein Ventil 12 an einer strömaufwärtigen Seite des Behälters 7 angeordnet.

Einem Fluidauslasses 14 des Gehäuses 2 ist eine Mischkammer 13 vorgeschaltet. In dieser Mischkammer wird die durch den Lufteinlass 10 strömende Luft mit dem durch das Rückschlagventil 11 aus der Kartusche 4 austretenden Aerosol vermischt.

Das durchmischte Aerosol verlässt das Gehäuse 2 durch den Fluidauslass 14.

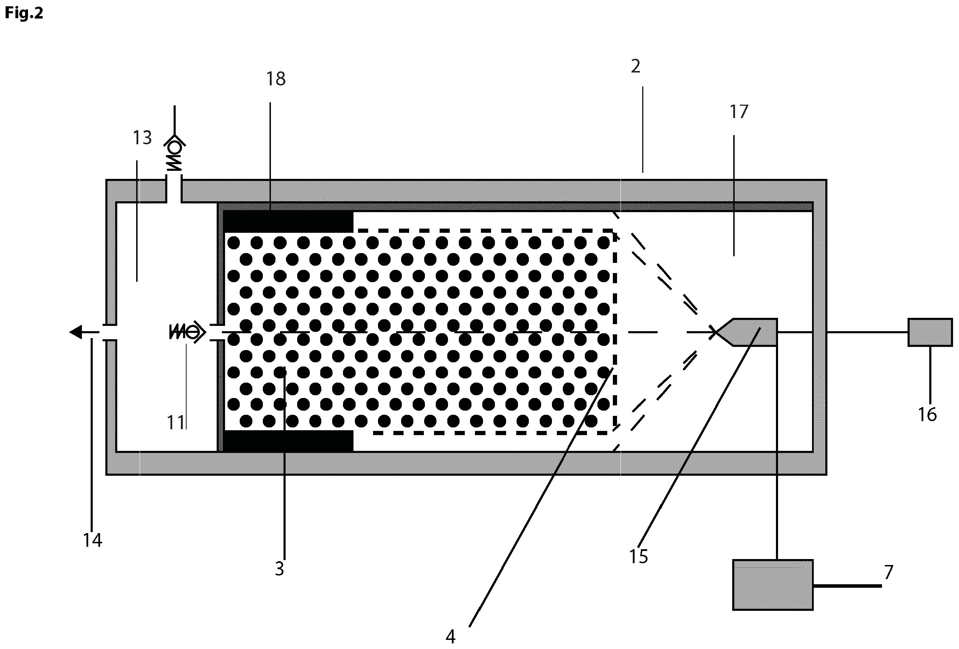

Fig. 2 Zeit eine Vorrichtung mit einer Venturi-Düse.

Hierbei ist ein Sprühkopf 15 in dem Gehäuse 2 zwischen dessen stromaufwärtigem Ende (rechts in Fig. 2) und stromabwärtigen Ende (links in Fig. 2) angeordnet.

Dem Sprühkopf 15 wird mittels einer Drucklufteinheit 16 regelbar oder steuerbar Druckluft zugeführt. Der Sprühkopf versprüht die in dem Behälter 7 enthaltene Flüssigkeit hin zu der das Adsorptionsmittel enthaltenden Kartusche 4.

Die Kartusche 4 weist an mindestens drei Seiten, wie in Fig. 2 gezeigt entlang ihres Umfangs sowie an einer dem Sprühkopf zugewandten Stirnseite, Öffnungen 5 auf. In anderen Worten kann die Kartusche 4 als Gitterstruktur ausgestaltet sein, sodass die versprühte Flüssigkeit mit dem Adsorptionsmittel in Kontakt treten kann.

Das Gehäuse 2 weist eine Sprühkammer 17 auf, welche von der Mischkammer 13 über ein Dichtungselement in Form eines umlaufenden Kragens 18 getrennt ist. Bei dieser Ausführungsform weist das Gehäuse neben den Kammern 13 und 17 keine weitere Kammer auf.

Die Kartusche 4 ist in den umlaufenden Kragen 18 eingepasst und springt in die Sprühkammer 17 hervor.

Das durch den Sprühkopf erzeugte Aerosol durchläuft die Kartusche 4 mit dem Adsorptionsmatenal und tritt dann durch das Ventil 11 in die Mischkammer 13 ein, bevor es das Gehäuse 2 durch den Fluidauslass 14 verlässt.

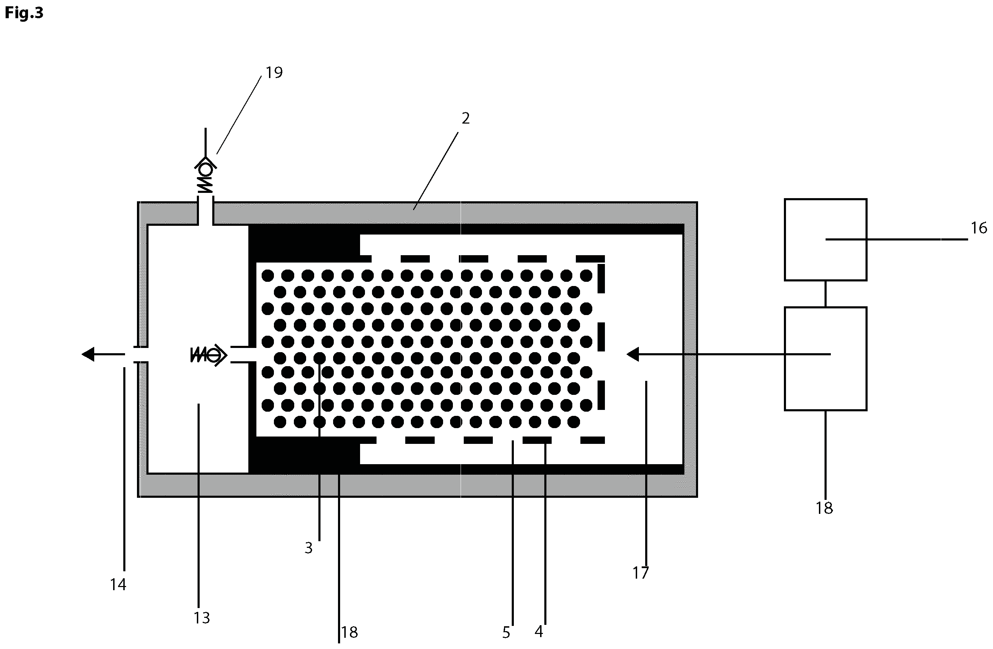

Fig. 3 zeigt eine Ausgestaltung mit einem drucklosen Zerstäuber 18, beispielsweise einem Ultraschallvernebler.

Die Kartusche 4 weist wie bei der Variante aus Fig. 3 an mindestens drei Seiten, z.B. entlang ihres Umfangs sowie an einer dem Sprühkopf 15 zugewandten Stirnseite, Öffnungen 5 auf.

Die Öffnungen 5 sind bei der Ausgestaltung aus Fig. 3 größer gewählt als bei der Ausgestaltung aus Fig. 2. In anderen Worten ist eine Gitterstruktur der Kartusche 4 gröber als in Fig. 3.

Die Mischkammer 13 ist mit einer mit einem Ventil 19 regelbar verschließbaren Öffnung ausgestattet.

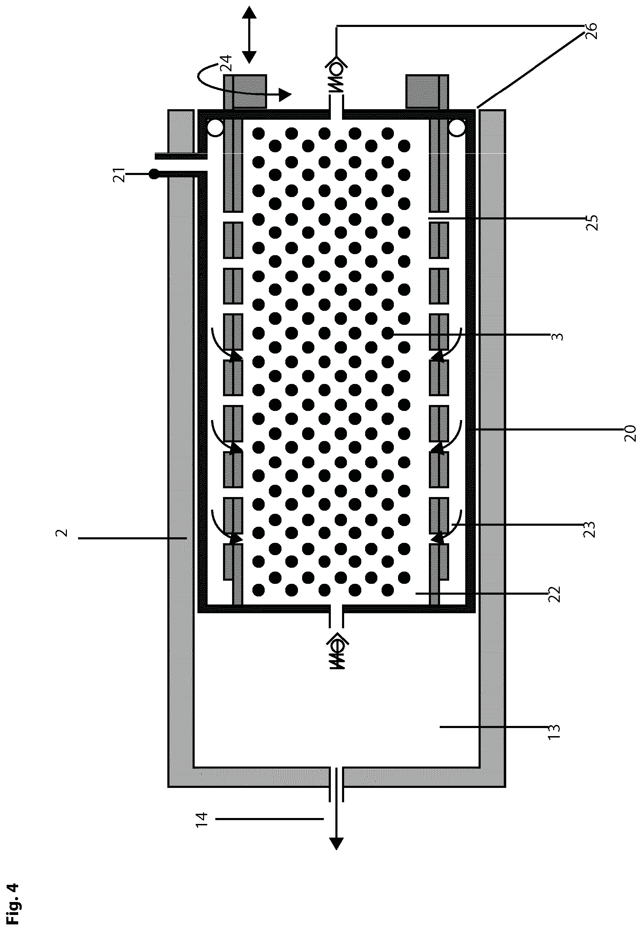

Fig. 4 zeigt eine Ausführungsform mit zwei relativ zu einander verschieblichen zylindrischen Gehäusen innerhalb des Gehäuses 2.

In dem Gehäuse 2 ist ein Flüssigkeitstank 20 vorgesehen, innerhalb dessen das Adsorptionsmittel 3 angeordnet ist. Der Flüssigkeitstank 20 ist mittels eines Einfüllstutzens 21 befüllbar.

Das Adsorptionsmittel 3 ist innerhalb eines inneren Zylinders 22 angeordnet, welcher innerhalb eines äußern Zylinders 23 angeordnet ist.

Die Zylinder 22 und 23 sind relativ zueinander beweglich und können durch Drehen und / oder Schieben eines Schiebers 24 relativ zueinander rotiert und / oder verschoben werden.

Die Zylinder 22,23 weisen jeweils Öffnungen 25 auf, welche sich in der in Fig. 4 gezeigten Darstellung in Deckung befinden, sodass Flüssigkeit von dem Flüssigkeitstank 20, wie durch die Pfeile in Fig. 4 angedeutet, zu dem Adsorptionsmittel 3 fließen kann.

Luft gelangt zu dem Adsorptionsmittel 3 bzw. der Mischkammer 13 durch die Lufteinlässe 26.

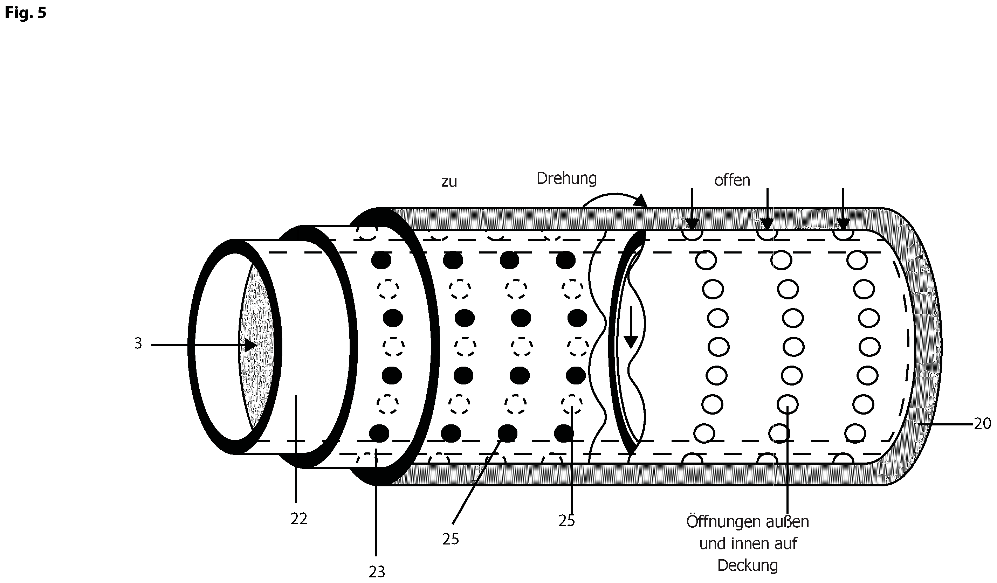

Fig. 5 zeigt eine andere Ansicht, welche die Funktionswiese der Ausgestaltung aus Fig. 4 zeigt.

Indem die Öffnungen 25 der inneren und äußeren Zylinder 22 und 23 auf Deckung gebracht werden, wird ein Flüssigkeitsfluss von dem Flüssigkeitsbehälter 20 zu dem Adsorptionsmittel ermöglicht.

Öffnungen 25 des inneren Zylinders 22 sind in Fig. 5 strichliert dargestellt, Öffnungen 25 des äußeren Zylinders 23 sind in Fig. 5 als schwarz gefüllte Kreise dargestellt.

In Fig. 5 ist auf der linken Seite ein Zustand dargestellt, in welchem die Öffnungen der inneren und äußeren Zylinder 22 und 23 einender nicht decken bzw. nicht miteinander fluchten, sodass kein Flüssigkeitsfluss von dem Flüssigkeitsbehälter 20 zu dem Adsorptionsmittel ermöglicht wird ("zu" in Fig. 5).

In Fig. 5 ist auf der rechten Seite ein Zustand dargestellt, in welchem die Öffnungen der inneren und äußeren Zylinder 22 und 23 einender decken bzw. miteinander fluchten, sodass ein Flüssigkeitsfluss von dem Flüssigkeitsbehälter 20 zu dem Adsorptionsmittel ermöglicht wird ("offen" in Fig. 5).

Die einander deckenden Öffnungen 25 der Zylinder 22 und 23 sind in Fig. 5 als Kreise mit durchgängigen Umfangslinien dargestellt.

Weiterhin kann eine erfindungsgemäße Vorrichtung eine Steuereinheit aufweisen, welche dazu ausgelegt ist, eine Relativbewegung der inneren und / oder äußeren Zylidner 22,23 zueinander derart zu veranlassen, dass ein Flüssigkeitsfluss von dem Flüssigkeitsbehälter 20 zu dem Adsorptionsmittel entweder ermöglicht oder gesperrt wird (der durch die Öffnungen 25 gebildete Strömungspfad ist offen oder zu) oder auf eine bestimmte Durchflussrate begrenzt wird (der durch die Öffnungen 25 gebildete Strömungspfad ist teilweise offen).

Die Steuereinheit kann hierbei auf eine Benutzereingabe reagieren.

Die vorliegende Erfindung zeichnet sich durch die folgenden Aspekte aus:
1. Vorrichtung zur Erzeugung eines Aerosols, mit:
   - einem ein Adsorptionsmittel aufweisenden Durchströmungskörper, wobei
   - der Durchströmungskörper an einem stromaufwärtigen Ende mindestens einen Fluideinlass und an einem stromabwärtigen Ende mindestens einen Fluidauslass aufweist, und
   - das Adsorptionsmittel dazu ausgelegt ist, einem in dem Durchströmungskörper entstehenden Aerosol Flüssigkeit zu entziehen, um so eine Tröpfchengröße eines in dem Durchströmungskörper erzeugten Aerosols in Strömungsrichtung des Aerosols hin zu dem Fluidauslass zu reduzieren, wobei hierfür das Adsorptionsmittel einen Zeolithen umfasst und eine Menge des Zeolithen in dem Durchströmungskörper zwischen 50g und 150g beträgt, und
   - das Adsorptionsmittel in einem inneren Gehäuse aufgenommen ist, welches von einem äußeren Gehäuse umgeben ist, wobei das innere und das äußere Gehäuse relativ zueinander rotierbar und/oder verschieblich beweglich angeordnet sind und das innere Gehäuse und das äußere Gehäuse jeweils mindestens eine entlang des Umfangs des Gehäuses angeordnete Öffnung aufweisen, wobei das innere und das äußere Gehäuse relativ zueinander derart rotierbar und/oder verschieblich sind, dass die mindestens zwei Öffnungen zumindest teilweise in Deckung bringbar sind, wodurch ein Fluidpfad in Radialrichtung von außerhalb des äußeren Gehäuses, vorzugsweise von einem Behälter zur Bevorratung einer Flüssigkeit, hin zu dem im inneren Gehäuse enthaltenen Adsorptionsmittel geschaffen wird.
2. Vorrichtung gemäß Aspekt 1, dadurch gekennzeichnet, dass das Adsorptionsmittel dazu ausgelegt ist, dem in dem Durchströmungskörper entstehenden Aerosol Wasser zu entziehen.
3. Vorrichtung gemäß Aspekt 1 oder 2, dadurch gekennzeichnet, dass eine Luftführung in dem Durchströmungskörper derart ausgestaltet ist, dass Luft und/oder ein in dem Durchströmungskörper entstehendes Aerosol das Adsorptionsmittel durchströmt.
4. Vorrichtung gemäß einem der vorhergehenden Aspekte, dadurch gekennzeichnet, dass die Menge an Zeolith in dem Durchströmungskörper zwischen 80g und 120g liegt.
5. Vorrichtung gemäß einem der vorhergehenden Aspekte, weiterhin mit einem in die Vorrichtung integrierten oder extern von dieser vorgesehenen Behälter zur Bevorratung einer Flüssigkeit, vorzugsweise eines Gemischs aus Wasser und mindestens einem Wirkstoff.
6. Vorrichtung gemäß Aspekt 5, dadurch gekennzeichnet, dass der Behälter mit Druck, vorzugsweise im Bereich von 1 bar bis 3 bar, insbesondere 1,5 bar bis 2,5 bar, beaufschlagbar ist.
7. Vorrichtung gemäß Aspekt 5 oder 6, dadurch gekennzeichnet, dass der Behälter zur Bevorratung der Flüssigkeit einen Lagerbereich des Adsorptionsmittels vorzugsweise konzentrisch umgibt oder diesem in Strömungsrichtung des Aerosols vorgeschaltet ist.
8. Vorrichtung nach einem der vorhergehenden Aspekte, dadurch gekennzeichnet, dass das innere Gehäuse zylindrisch ist und/oder das äußere Gehäuse zylindrisch ist und/oder das innere Gehäuse vom äußeren Gehäuse konzentrisch umgeben ist.
9. Vorrichtung gemäß einem der vorhergehenden Aspekte, weiterhin mit einer Zerstäuber- oder Verneblereinheit, welche dem Adsorptionsmittel in Strömungsrichtung des Aerosols vorgeschaltet ist.
10. Vorrichtung gemäß Aspekt 9, dadurch gekennzeichnet, dass die Zerstäuber- oder Verneblereinheit eine Düse, insbesondere eine Venturi-Düse, und/oder einen drucklosen Verstäuber, vorzugsweise einen Ultraschall-Vernebler, aufweist oder aus diesem besteht.
11. Vorrichtung gemäß einem der vorhergehenden Aspekte, dadurch gekennzeichnet, dass dem Fluidauslass vorzugsweise unmittelbar eine Mischkammer zur Durchmischung des aus dem Adsorptionsmittel austretenden Aerosols vorgeschaltet ist.
12. Vorrichtung gemäß einem der vorhergehenden Aspekte, dadurch gekennzeichnet, dass das Adsorptionsmittel in der Vorrichtung entnehmbar, vorzugsweise in einer entnehmbaren Kartusche, gelagert ist.
13. Vorrichtung gemäß einem der vorhergehenden Aspekte, dadurch gekennzeichnet, dass die Vorrichtung ein Inhalator zur Verabreichung eines pharmazeutischen Wirkstoffs ist.
14. Vorrichtung gemäß einem der Aspekte 5 bis 13, dadurch gekennzeichnet, dass der Wirkstoff ein Small-Molecule-Wirkstoff, Nikotin, Protein, Hormon oder Zytokin und/oder ein Wirktstoff aus der Gruppe der Zytostatika, Antiasthmatika, Antitussiva, Mukolytika, Antiallergika, Corticoide, Kardiaka, Koronarmittel und/oder Antibiotika und/oder ein Geschmacksstoff, Duftstoff, Aromastoff und/oder Terpen ist.

## Patentansprüche

1. Vorrichtung zur Erzeugung eines Aerosols, mit:
- einem ein Adsorptionsmittel aufweisenden Durchströmungskörper, wobei
- der Durchströmungskörper an einem stromaufwärtigen Ende mindestens einen Fluideinlass und an einem stromabwärtigen Ende mindestens einen Fluidauslass aufweist, und
- das Adsorptionsmittel dazu ausgelegt ist, einem in dem Durchströmungskörper entstehenden Aerosol Flüssigkeit zu entziehen, um so eine Tröpfchengröße eines in dem Durchströmungskörper erzeugten Aerosols in Strömungsrichtung des Aerosols hin zu dem Fluidauslass zu reduzieren, wobei hierfür das Adsorptionsmittel einen Zeolithen umfasst und eine Menge des Zeolithen in dem Durchströmungskörper zwischen 50g und 150g beträgt.

2. Vorrichtung gemäß Anspruch 1, **dadurch gekennzeichnet, dass** das Adsorptionsmittel dazu ausgelegt ist, dem in dem Durchströmungskörper entstehenden Aerosol Wasser zu entziehen.

3. Vorrichtung gemäß Anspruch 1 oder 2, **dadurch gekennzeichnet, dass** eine Luftführung in dem Durchströmungskörper derart ausgestaltet ist, dass Luft und/oder ein in dem Durchströmungskörper entstehendes Aerosol das Adsorptionsmittel durchströmt.

4. Vorrichtung gemäß einem der vorhergehenden Ansprüche, **dadurch gekennzeichnet, dass** die Menge an Zeolith in dem Durchströmungskörper zwischen 80g und 120g liegt.

5. Vorrichtung gemäß einem der vorhergehenden Ansprüche, weiterhin mit einem in die Vorrichtung integrierten oder extern von dieser vorgesehenen Behälter zur Bevorratung einer Flüssigkeit, vorzugsweise eines Gemischs aus Wasser und mindestens einem Wirkstoff.

6. Vorrichtung gemäß Anspruch 5, **dadurch gekennzeichnet, dass** der Behälter mit Druck, vorzugsweise im Bereich von 1 bar bis 3 bar, insbesondere 1,5 bar bis 2,5 bar, beaufschlagbar ist.

7. Vorrichtung gemäß Anspruch 5 oder 6, **dadurch gekennzeichnet, dass** der Behälter zur Bevorratung der Flüssigkeit einen Lagerbereich des Adsorptionsmittels vorzugsweise konzentrisch umgibt oder diesem in Strömungsrichtung des Aerosols vorgeschaltet ist.

8. Vorrichtung gemäß einem der vorhergehenden Ansprüche, **dadurch gekennzeichnet, dass** das Adsorptionsmittel einem inneren, vorzugsweise zylindrischen Gehäuse aufgenommen ist, welches von einem äußeren vorzugsweise zylindrischen, Gehäuse vorzugsweise konzentrisch umgeben ist, wobei das innere und das äußere Gehäuse relativ zueinander rotierbar und/oder verschieblich beweglich angeordnet sind.

9. Vorrichtung gemäß Anspruch 8, **dadurch gekennzeichnet, dass** das innere Gehäuse und das äußere Gehäuse jeweils mindestens eine entlang des Umfangs des Gehäuses angeordnete Öffnung aufweisen, wobei das innere und das äußere Gehäuse relativ zueinander derart rotierbar und/oder verschieblich sind, dass die mindestens zwei Öffnungen zumindest teilweise in Deckung bringbar sind, wodurch ein Fluidpfad in Radialrichtung von außerhalb des äußeren Gehäuses, vorzugsweise von dem Behälter zur Bevorratung der Flüssigkeit, hin zu dem im inneren Gehäuse enthaltenen Adsorptionsmittel geschaffen wird.

10. Vorrichtung gemäß einem der vorhergehenden Ansprüche, weiterhin mit einer Zerstäuber- oder Verneblereinheit, welche dem Adsorptionsmittel in Strömungsrichtung des Aerosols vorgeschaltet ist.

11. Vorrichtung gemäß Anspruch 10, **dadurch gekennzeichnet, dass** die Zerstäuber- oder Verneblereinheit eine Düse, insbesondere eine Venturi-Düse, und/oder einen drucklosen Verstäuber, vorzugsweise einen Ultraschall-Vernebler, aufweist oder aus diesem besteht.

12. Vorrichtung gemäß einem der vorhergehenden Ansprüche, **dadurch gekennzeichnet, dass** dem Fluidauslass vorzugsweise unmittelbar eine Mischkammer zur Durchmischung des aus dem Adsorptionsmittel austretenden Aerosols vorgeschaltet ist.

13. Vorrichtung gemäß einem der vorhergehenden Ansprüche, **dadurch gekennzeichnet, dass** das Adsorptionsmittel in der Vorrichtung entnehmbar, vorzugsweise in einer entnehmbaren Kartusche, gelagert ist.

14. Vorrichtung gemäß einem der vorhergehenden Ansprüche, **dadurch gekennzeichnet, dass** die Vorrichtung ein Inhalator zur Verabreichung eines pharmazeutischen Wirkstoffs ist.

15. Vorrichtung gemäß einem der Ansprüche 5 bis 14, **dadurch gekennzeichnet, dass** der Wirkstoff ein Small-Molecule-Wirkstoff, Nikotin, Protein, Hormon oder Zytokin und/oder ein Wirktstoff aus der Gruppe der Zytostatika, Antiasthmatika, Antitussiva, Mukolytika, Antiallergika, Corticoide, Kardiaka, Koronarmittel und/oder Antibiotika und/oder ein Geschmacksstoff, Duftstoff, Aromastoff und/oder Terpen ist.
